Europäisches Patentamt

European Patent Office

Office européen des brevets

(11) Veröffentlichungsnummer: **0 145 805**
**B1**

(12) # EUROPÄISCHE PATENTSCHRIFT

(45) Veröffentlichungstag der Patentschrift:
08.02.89

(51) Int. Cl.⁴: **H 04 N 7/08,** H 04 N 7/04

(21) Anmeldenummer: 83112760.0

(22) Anmeldetag: 19.12.83

(54) Korrekturverfahren für Fehler in Zeichensignalen von Video/Teletextsignalen.

(43) Veröffentlichungstag der Anmeldung:
26.06.85 Patentblatt 85/26

(45) Bekanntmachung des Hinweises auf die Patenterteilung:
08.02.89 Patentblatt 89/6

(84) Benannte Vertragsstaaten:
DE FR GB IT NL

(56) Entgegenhaltungen:
US-A- 4 349 904

FUNKSCHAU, Band 49, Nr. 18/19, 1977, München,
BRD; D. EATON et al. "Die Grundlagen von Teletext und
Viewdata", Seiten 820-824, 882-887

(73) Patentinhaber: **Deutsche ITT Industries GmbH,**
**Hans-Bunte-Strasse 19 Postfach 840, D-7800 Freiburg**
**(DE)**

(84) Benannte Vertragsstaaten: **DE**

(73) Patentinhaber: **ITT INDUSTRIES INC., 320 Park Avenue,**
**New York, NY 10022 (US)**

(84) Benannte Vertragsstaaten: **FR GB IT NL**

(72) Erfinder: **Micic, Ljubomir, Dipl.-Ing., Sundgauallee 15,**
**D-7800 Freiburg i.Br. (DE)**
Erfinder: **Fischer, Thomas, Dr., In der Breite 44,**
**D-7801 Umkirch (DE)**
Erfinder: **Langenkamp, Ulrich, Dipl.-Ing.,**
**Jacobistrasse 15, D-7800 Freiburg i.Br. (DE)**

(74) Vertreter: **Morstadt, Volker, Dipl.-Ing. et al, c/o**
**Deutsche ITT Industries GmbH Patent/Lizenzabteilung**
**Postfach 840 Hans-Bunte-Strasse 19,**
**D-7800 Freiburg/Brsg. (DE)**

**Beschreibung**

Die Erfindung betrifft ein Korrekturverfahren für Fehler in den einzelnen Zeichensignalen von Video/Teletextsignalen, die seitenweise nacheinander periodisch empfangen und nach Decodierung Textseite für Textseite in für jede einzelne Textseite fest vorgesehenen ersten Teilbezirken eines Seitenspeichers eines Fernsehempfängers gespeichert werden und von dort aus, auf ein Bedienungs-Auswahlsignal hin, die Anzeige der ausgewählten Video/Teletextseite auf dem Fernsehbildschirm bewirken, wobei fehlerhafte Zeichen durch Paritätsprüfung der Zeichensignale als Leerzeichen angezeigt werden, die durch richtige Zeichen ersetzt werden, die in derselben Textseite zum nächsten Empfangszeitpunkt enthalten sind, vgl. den Oberbegriff des Anspruchs 1.

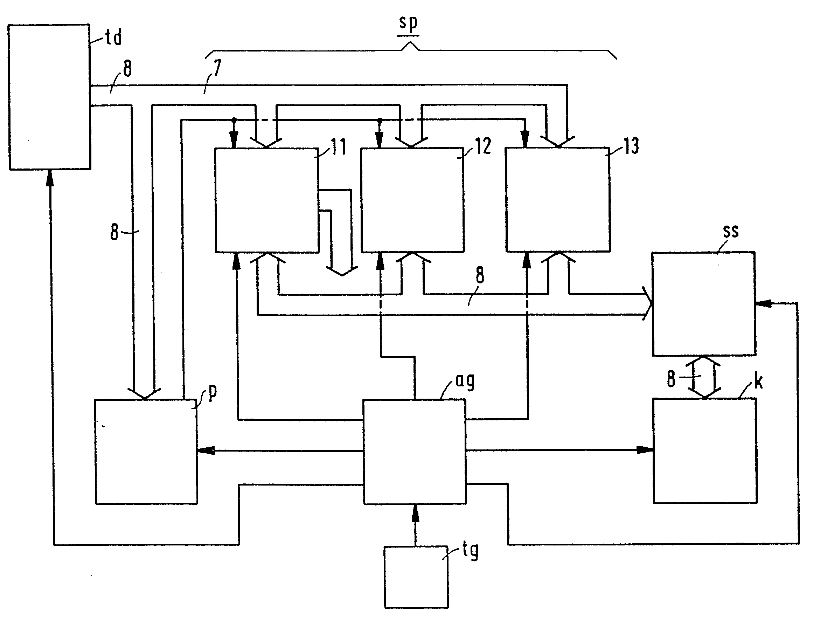

Ein derartiges Korrekturverfahren ist in der Zeitschrift «Funkschau», 1977, Seiten 820 bis 824 und 882 bis 887, insbesondere Seite 885, rechte Spalte oben beschrieben. In Verbindung mit Bild 18 auf Seite 885 ist erkennbar, dass die Video/Teletextsignale ohne die Paritätsprüfstelle dem Seitenspeicher zugeführt sind, dagegen mit Paritätsprüfstelle der Paritätsprüfungsstufe zugeführt sind, deren Ausgangssignal über ein UND-Gatter den Schreib-Enable-Eingang des Seitenspeichers beeinflusst, d.h. nur bei positivem Ergebnis der Paritätsprüfung werden die Video/Teletextsignale im Seitenspeicher abgelegt, während bei negativem Paritätsprüfungsergebnis der entsprechende Speicherplatz gesperrt bleibt und somit bei der Anzeige auf dem Fernsehbildschirm ein Leerzeichen an dieser Stelle erscheint.

Mittels der Paritätsprüfung kann lediglich ein Fehler in einer Stelle jedes Video/Teletextsignals erfasst werden, während Doppelfehler durch die Paritätsprüfung nicht erkannt werden. Die Aufgabe der in den Ansprüchen gekennzeichneten Erfindung besteht daher darin, ein Korrekturverfahren der eingangs beschriebenen Art anzugeben, mit dem mindestens auch Doppelfehler erkannt werden können und das in einer Weiterbildung auch diese Fehler zu korrigieren erlaubt.

Ein Hauptvorteil der Erfindung ergibt sich somit unmittelbar aus der Aufgabenlösung, da das bekannte Korrekturverfahren durch die Erfindung wesentlich verbessert wird.

Aus der DE-A-2 020 413 (entspricht der US-A-3 732 541) ist allerdings ein Zeilenkorrekturverfahren für übertragene Zeichen bekannt, das z.B. bei einem im Fernsehmodus arbeitenden Sichtgerät angewandt werden kann. Diese Druckschrift erwähnt jedoch das Video/Teletextsystem nicht, wohl weil es 1970 noch gar nicht bekannt war. Bei dem vorbekannten Zeichenkorrekturverfahren wird das aufgrund der Paritätsprüfung entstehende Ergebnissignal zusätzlich zu den Zeichenstellen jeden Zeichensignals als deren Paritätsstelle im Seitenspeicher sp abgelegt. Ferner werden einander entsprechende Zeichensignale zweier aufeinanderfolgender identischer Textseiten auf Gleichheit der Zeichenstellen geprüft und in Abhängigkeit von den beiden Paritätsstellen ausgewertet.

Die Erfindung modifiziert die letzterwähnte Massnahme in der beanspruchten Weise.

Die Erfindung wird nun anhand der einzigen Figur der Zeichnung näher erläutert, die ein stark schematisiertes Blockschaltbild eines Ausführungsbeispiels zur Durchführung des Korrekturverfahrens zeigt.

In der Figur ist zunächst der Teletextdecoder td gezeigt, in dem alle diejenigen Stufen aus Bild 18 auf Seite 885 der genannten Zeitschrift vereinigt gedacht werden können, die die Video/Teletextsignale so aufbereiten, dass sie in den Seitenspeicher sp eingeschrieben werden können. Der Ausgang des Teletextdecoders td ist daher mit den Dateneingängen der einzelnen Teilbezirke 11, 12, 13 des Seitenspeichers sp verbunden, und zwar derart, dass lediglich die sieben ersten Stellen (Bezugszeichen 7) ohne die Paritätsstelle mit den Dateneingängen verbunden sind. Andererseits liegt der Ausgang des Teletextdecoders td einschliesslich der Paritätsstelle am Eingang (Bezugszeichen 8) der Paritätsprüfungsstufe p, deren das Ergebnissignal der Paritätsprüfung führende Ausgangsleitung als achte Daten-Eingangsleitung mit dem jeweiligen Dateneingang der Teilbezirke 11, 12, 13 des Seitenspeichers sp verbunden ist.

Im ersten Teilbezirk 11 des Seitenspeichers sp ist eine bestimmte empfangene Textseite abgelegt, wobei diese Textseite entsprechend festgestellte fehlerbehaftete Zeichen enthält. Im zweiten Teilbezirk 12 des Seitenspeichers sp wird die nächste empfangene und mit der im ersten Teilbezirk abgelegten Textseite identische Textseite gespeichert, wobei wiederum auch hier das Ergebnissignal der Paritätsprüfung als Paritätsstelle des jeweiligen Zeichensignals gespeichert wird.

Die beiden Teilbezirke 11, 12 stehen über den gezeigten achtfachen Datenbus mit der Speichersteuerung ss in Verbindung, die wiederum mit dem Komparator k im Datenaustausch steht. Somit werden einander entsprechende Zeichensignale der beiden gleichen, in den Teilbezirken 11, 12 abgelegten Textseiten auf Gleichheit der Zeichenstellen mittels des Komparators k geprüft und in Abhängigkeit von den beiden Paritätsstellen wie folgt ausgewertet. Bei Gleichheit und gültiger Parität beider Zeichensignale bleibt das im ersten Teilbezirk 11 gespeicherte Zeichensignal unverändert. Bei Ungleichheit beider Zeichensignale und gültiger Parität eines der beiden Zeichensignale wird das mit gültiger Parität im ersten Teilbezirk 11 abgelegt, wenn dort noch kein Zeichensignal mit gültiger Parität enthalten ist, oder das bereits im ersten Teilbezirk 11 abgelegte Zeichensignal mit gültiger Parität bleibt dort erhalten. Bei Ungleichheit und ungültiger Parität beider Zeichensignale erfolgt keine Veränderung im ersten Teilbezirk 11, während bei Ungleichheit und gültiger Parität beider Zeichensignale das Zeichensignal im ersten Teilbezirk 11 durch ein Leerzeichensignal ersetzt wird.

Dieses Korrekturverfahren läuft kontinuierlich weiter, da die übernächste empfangene und mit der im ersten Teilbezirk 11 gespeicherten Textseite identische Textseite durch Überschreiben der zuvor im zweiten Teilbezirk 12 gespeicherten Signale abgelegt wird. Somit werden durch das kontinuierlich ablaufende Korrekturverfahren die zu einem angezeigten Leerzeichen führenden Zeichenfehler laufend verringert.

In der Figur der Zeichnung ist ausser den bereits genannten Teilschaltungen noch die Ablaufsteuerung ag gezeigt, die, ausgehend von den Ausgangsimpulsen des Taktgenerators tg, alle übrigen Teilschaltungen mit funktionsrichtigen Taktsteuersignalen versorgt. Bei der üblichen Video/ Teletext-Norm, wie sie in der eingangs genannten Zeitschrift beschrieben ist, beträgt die Frequenz des Taktgenerators tg 6,9375 MHz.

Die Figur der Zeichnung enthält mit dem dritten Teilbezirk 13 des Seitenspeichers sp und dessen entsprechender Ansteuerung die Möglichkeit, die Fehlerkorrektur und somit das Korrekturverfahren der Erfindung weiterzubilden und zu verbessern. Im dritten Teilbezirk 13 wird die übernächste empfangene und mit der im ersten Teilbezirk 11 gespeicherten Textseite identische Textseite mit ihren Zeichensignalen auf dieselbe Art und Weise wie im ersten Teilbezirk 11 gespeichert. Einander entsprechende Zeichensignale der drei gleichen Textseiten werden auf Gleichheit der Zeichenstellen geprüft und in Abhängigkeit von den drei Paritätsstellen wie folgt ausgewertet. Bei Gleichheit und gültiger Parität der ersten beiden Zeichensignale bleibt das im ersten Teilbezirk 11 gespeicherte Zeichensignal unverändert. Bei Ungleichheit der ersten beiden Zeichensignale und ungültiger Parität eines dieser beiden Zeichensignale wird das mit gültiger Parität im ersten Teilbezirk 11 abgelegt, oder wenn dort bereits das Zeichensignal mit gültiger Parität enthalten ist, bleibt es unverändert. Bei Ungleichheit und ungültiger Parität der ersten beiden, jedoch gültiger Parität des dritten Zeichensignals wird dieses im ersten Teilbezirk 11 abgelegt. Schliesslich wird bei Ungleichheit und gültiger Parität der ersten beiden Zeichensignale und jeweliger Gleichheit mit dem dritten Zeichensignal dieses im ersten Teilbezirk 11 abgelegt. Die beiden weiteren nachfolgenden empfangenen identischen Textseiten werden im zweiten bzw. dritten Teilbezirk 12, 13 durch Überschreiben der zuvor gespeicherten Signale abgelegt und das Korrekturverfahren mit diesen Signalen wiederholt.

Durch das erweiterte Korrekturverfahren mittels des dritten Teilbezirks 13 werden nicht nur Einfachfehler in einer Stelle der Zeichensignale erkannt und korrigiert, sondern zusätzlich zu der mit dem ersten und dem zweiten Teilbezirk 11, 12 möglichen Doppelfehlererkennung werden auch diese Doppelfehler korrigiert.

Besonders wirkungsvoll wird das Korrekturverfahren nach der Erfindung, wenn bei einem sich über mehrere Textseiten erstreckenden fortlaufenden Text schon während der Anzeige beispielsweise der Seite 1 bereits gesendete folgende Textseiten, die mit grosser Wahrscheinlichkeit auch angezeigt werden sollen, in freien Teilbezirken des Seitenspeichers nach dem erfindungsgemässen Verfahren aufgebaut und entsprechend korrigiert werden. Derartige Folgeseiten sind dann beim Abruf auf dem Bildschirm selbst unter gestörten Empfangsbedingungen sofort fehlerfrei.

## Patentansprüche

1. Korrekturverfahren für Fehler in den einzelnen Zeichensignalen von Video/Teletextsignalen, die seitenweise nacheinander periodisch empfangen und nach Decodierung Textseite für Textseite in für jede einzelne Textseite fest vorgesehenen ersten Teilbezirken (11) eines Seitenspeichers (sp) eines Fernsehempfängers gespeichert werden und von dort aus, auf ein Bedienungsauswahlsignal hin, die Anzeige der ausgewählten Video/Teletextseite auf dem Fernsehbildschirm bewirken, wobei fehlerhafte Zeichen durch Paritätsprüfung der Zeichensignale als Leerzeichen angezeigt werden, die durch richtige Zeichen ersetzt werden, die in derselben Textseite zum nächsten Empfangszeitpunkt enthalten sind, gekennzeichnet durch folgende Merkmale:

- das aufgrund der Paritätsprüfung entstehende Ergebnissignal wird zusätzlich zu den Zeichenstellen jeden Zeichensignals als deren Paritätsstelle im Seitenspeicher (sp) abgelegt,
- in einem eigenen zweiten Teilbezirk (12) des Seitenspeichers (sp) wird die nächste empfangene und mit der im ersten Teilbezirk (11) gespeicherten Textseite identische Textseite mit ihren Zeichensignalen auf dieselbe Art und Weise gespeichert,
- einander entsprechende Zeichensignale der beiden identischen Textseiten werden auf Gleichheit der Zeichenstellen geprüft und in Abhängigkeit von den beiden Paritätsstellen wie folgt ausgewertet:
  - bei Gleichheit und gültiger Parität beider Zeichensignale bleibt das im ersten Teilbezirk (11) gespeicherte Zeichensignal unverändert,
  - bei Ungleichheit beider Zeichensignale und gültiger Parität eines der beiden Zeichensignale wird das mit gültiger Parität im ersten Teilbezirk (11) abgelegt bzw. bleibt dort erhalten,
  - bei Ungleichheit und ungültiger Parität beider Zeichensignale erfolgt keine Veränderung im ersten Teilbezirk (11), und
  - bei Ungleichheit und gültiger Parität beider Zeichensignale wird das Zeichensignal im ersten Teilbezirk (11) durch ein Leerzeichensignal ersetzt, und
- die übernächste empfangene identische Textseite wird im zweiten Teilbezirk (12) durch Überschreiben der zuvor gespeicherten Signale abgelegt und das Korrekturverfahren mit diesen Signalen wiederholt.

2. Korrekturverfahren nach Anspruch 1, gekennzeichnet durch folgende Merkmale:
- in einem eigenen dritten Teilbezirk (13) des Seitenspeichers (sp) wird die übernächste empfangene und mit der im ersten Teilbezirk (11) gespeicherten Textseite identische Textseite mit ihren Zeichensignalen auf dieselbe Art und Weise gespeichert,
- einander entsprechende Zeichensignale der drei identischen Textseiten werden auf Gleichheit der Zeichenstellen geprüft und in Abhängigkeit von den drei Paritätsstellen wie folgt ausgewertet:
    - bei Gleichheit und gültiger Parität der ersten beiden Zeichensignale bleibt das im ersten Teilbezirk (11) gespeicherte Zeichensignal unverändert,
    - bei Ungleichheit der ersten beiden Zeichensignale und ungültiger Parität eines dieser beiden Zeichensignale wird das mit gültiger Parität im ersten Teilbezirk (11) abgelegt bzw. bleibt dort erhalten,
    - bei Ungleichheit und ungültiger Parität der ersten beiden, jedoch gültiger Parität des dritten Zeichensignals wird dieses im ersten Teilbezirk (11) abgelegt,
    - bei Ungleichheit und gültiger Parität der ersten beiden Zeichensignale und jeweiliger Gleichheit mit dem dritten Zeichensignal wird dieses im ersten Teilbezirk (11) abgelegt, und
- die beiden nachfolgenden empfangenen identischen Textseiten werden im zweiten bzw. dritten Teilbezirk (12, 13) durch Überschreiben der zuvor gespeicherten Signale abgelegt und das Korrekturverfahren mit diesen Signalen wiederholt.

## Claims

1. Method of correcting errors in the individual bytes of teletext signals which are received successively and periodically page by page and, after being decoded, stored page by page into first segments (11) of a page memory (sp) of a television receiver each of which is designed to hold one page, and from which they cause the selected teletext page to be displayed on the television screen in response to a page selection signal, with erroneous characters being detected by parity checks of the bytes and indicated as blank characters which are replaced by correct characters contained in the same page at the next instant of reception, characterized by the following features:
- The signal resulting from the parity check is stored into the page memory (sp) in addition to the character bits of each byte as the parity bit of the latter;
- in a special second segment (12) of the page memory (sp) the next received page which is identical with the page stored in the first segment (11) is stored in the same manner;
- corresponding bytes of the two identical pages are checked for equality of the character bits and evaluated in accordance with the two parity bits as follows:
    - In case of equality and correct parity of the two bytes, the byte stored in the first segment (11) remains unchanged;
    - in case of inequality of the two bytes and correct parity of one of the two bytes, the byte having correct parity is stored into or remains stored in the first segment (11);
    - in case of inequality an correct parity of the two bytes, no change is made in the first segment (11), and
    - in case of inequality and correct parity of the two bytes, the byte in the first segment (11) is replaced by a blank byte, and
- the next received identical page but one is stored in the second segment (12) by overwriting the bytes previously stored there, and the correction is repeated with these bytes.

2. A correcting method as claimed in claim 1, characterized by the following features:
- In a special third segment (13) of the page memory (sp), the next received page but one which is identical with the page stored in the first segment (11) is stored in the same manner;
- corresponding bytes of the three identical pages are checked for equality of the character bits and evaluated in accordance with the three parity bits as follows:
    - In case of equality and correct parity of the first two bytes, the byte stored in the first segment (11) remains unchanged;
    - in case of inequality of the first two bytes and incorrect parity of one of these two bytes, the byte having correct parity is stored into or remains stored in the first segment (11);
    - in case of inequality and incorrect parity of the first two bytes but correct parity of the third byte, the latter is stored into the first segment (11);
    - in case of inequality and correct parity of the first two bytes and equality to the third byte, the latter is stored into the first segment (11), and
- the two following received identical pages are stored into the second segment (12) and the third segment (13), respectively, by overwriting the bytes previously stored there, and the correction is repeated with these bytes.

## Revendications

1. Procédé pour corriger les erreurs dans les signaux de caractère séparés de vidéo/télétexte qui sont reçus périodiquement l'un après l'autre page par page et, après décodage, sont enregistrés page de texte par page de texte dans des premières subdivisions (11), prévues définitivement pour chaque page de texte, d'une mémoire de pages (sp) d'un récepteur de télévision et, de là, à la suite d'un signal de sélection de commande, assurent l'affichage de la page de vidéo/télétexte sélectionnée sur l'écran de télévision, les signes erronés étant affichés, par un contrôle de parité, sous forme de caractères espaces qui sont remplacés par de véritables caractères contenus dans la même page de texte au moment de réception suivant, caractérisé en ce que:
- le signal de résultat émis d'après le contrôle de parité est stocké dans la mémoire de pages (sp), en plus des éléments de caractère de chaque signal de caractère, en tant que leur élément de parité,

– dans une deuxième subdivision (12) de la mémoire de pages (sp) la page de texte suivante reçue et identique à la page de texte enregistrée dans la première subdivision (11) est enregistrée de la même manière avec ses caractères,

– les signaux de caractère correspondant l'un à l'autre des deux pages de texte identiques sont soumis à un contrôle de similitude des éléments de caractère et exploités en fonction des deux éléments de parité de la façon suivante:

– si les deux signaux de caractère sont similaires et ont une parité valide, le signal de caractère enregistré dans la première subdivision (11) reste inchangé,

– si les deux signaux de caractère ne sont pas similaires et si l'un de ces deux signaux de caractère a une parité valide, le signal de caractère ayant la parité valide est stocké dans la première subdivision (11) ou reste dans celle-ci,

– si les deux signaux de caractère ne sont pas similaires et ont une parité invalide, il ne se produit aucun changement dans la première subdivision (11), et

– si les deux signaux de caractère ne sont pas similaires et ont une parité valide, le signal de caractère contenu dans la première subdivision (11) est remplacé par un signal de caractère espace, et

– la deuxième page de texte identique reçue est stockée dans la deuxième subdivision (12) en recouvrant les signaux enregistrés précédemment et le procédé de correction se répète avec ces signaux.

2. Procédé de correction selon la revendication 1, caractérisé en ce que:

– dans une troisième subdivision particulière (13) de la mémoire de pages (sp), la deuxième page de texte suivante reçue et identique à la page de texte enregistrée dans la première subdivision (11) est enregistrée de la même manière avec ses signaux de caractère,

– les signaux de caractère correspondant l'un à l'autre des trois pages de texte identiques sont soumis à un contrôle de similitude et exploités en fonction des trois éléments de parité de la façon suivante:

– si les deux premiers signaux de caractère sont similaires et ont une parité valide, le signal de caractère enregistré dans la première subdivision (11) reste inchangé,

– si les deux premiers signaux de caractère ne sont pas similaires et si l'un de ces signaux de caractère a une parité invalide, le signal de caractère ayant la parité valide est stocké dans la première subdivision (11) ou reste dans celle-ci,

– si les deux premiers signaux de caractère ne sont pas similaires et ont une parité invalide, le troisième ayant cependant une parité valide, celui-ci est stocké dans la première subdivision (11),

– si les deux premiers signaux de caractère ne sont pas similaires, ont une parité valide et sont chacun similaires au troisième signal de caractère, celui-ci est stocké dans la première subdivision (11), et

– les deux pages de texte identiques suivantes reçues sont stockées dans la deuxième et la troisième subdivisions (12, 13) en recouvrant les signaux enregistrés précédemment et le procédé de correction se répète avec ces signaux.